# EUROPEAN PATENT APPLICATION

(11) **EP 1 947 851 A2**
(43) Date of publication of application: **23.07.2008**
(21) Application number: 07119427.8
(22) Date of filing: 26.10.2007
(51) Int. Cl.: H04N 7/14

(54) **Display apparatus and method for implementing screen saver for the same**

(30) Priority: 16.01.2007 KR 20070004780
(71) Applicant: Samsung Electronics Co., Ltd., Suwon-si, Gyeonggi-do 442-742 (KR)
(72) Inventor: Ahn, Young-ho, Gyeonggi-do (KR); Cho, Han-wook, Yeongtong-gu, Suwonsi Gyeonggi-do (KR); Kim, Kyoung-wook, Suwon-si Gyeonggi-do (KR)
(74) Representative: Grootscholten, Johannes A.M.

(57) **Abstract**

A display apparatus and a method for implementing a screen saver for the display apparatus are provided. The display apparatus includes a display unit; a communication unit which performs a video communication; a display processing unit which displays an image associated with the video communication on at least partial area of a screen of the display unit; and a control unit which activates a screen saver process for a remaining area except the at least partial area of the screen, if a preset event has occurred.

## Description

### BACKGROUND

### Field of the Invention

Apparatuses and methods consistent with the present invention relate to implementing a screen saver for a display apparatus, and more particularly to implementing a screen saver for the display apparatus which is capable of displaying a screen associated with a video communication.

### Description of the Related Art

Present and future communication environments have changed rapidly enough not to discriminate wireless and wired section or regional and national section. Particularly, the future communication environment represented by a mobile system such as International Mobile Telecommunication 2000 (IMT-2000) tends to be built as an environment which provides video and audio, along with various information required by a user in real time or synthetically. Further, due to the advancement of a communication system, even a present cellular phone or personal communication system (PCS) is being developed such that it may transmit short message information, as well as connect with the Internet wirelessly using a personal communication terminal or transmit/receive moving images which can be watched only on television (TV), beside simple voice communication. Particularly, a technology for transmitting the moving images is necessary in a digital TV system for transforming a moving image into digital data to transmit it in real time and receiving the digital data to display it and a personal digital assistant (PDA) for processing the moving image transmitted in real time using IMT-2000. The PDA can conventionally transmit/receive only human voice, while it can now transmit/receive a variety of information such as an audio and a video due to the development of multimedia and the advancement of a digital information processing technology. Such advancement of a communication technology and a moving image compressing technology enables to transmit/receive the audio and the video of the user in the video communication of multimedia environment.

The term "video communication" means a technology used for providing video conference or video telephone service between persons separated from each other by transferring the video along with the audio via a communication network. The video communication may be a video communication using a personal computer (PC) camera or a video communication using video chatting and video phone, as well as a video communication/video conversation using a mobile communication terminal.

Meanwhile, in a case of performing the video communication using a video communication system, a screen of the other party associated with the video communication is generally displayed on a partial area of a whole screen. In this case, since a remaining area except the area of the screen of the other party associated with the video communication is not nearly changed after elapsing of a certain time since the video communication is started, there is a problem that an after-image in a circumferential screen or a deterioration of pixel quality will occur when the video communication has persisted for long time.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a display apparatus and a method for implementing a screen saver for the same which are capable of preventing an after-image in a circumferential screen area and a deterioration of pixel quality by activating a screen saver process for a remaining area except an area of the screen associated with the video communication.

According to an aspect of the present invention, there is provided a display apparatus comprising: a display unit; a communication unit which performs a video communication; a display processing unit which displays an image associated with the video communication on at least partial area of a screen of the display unit; and a control unit which activates a screen saver process for a remaining area except the at least partial area of the screen, if a preset event has occurred.

The control unit may recognize occurrence of the preset event and activate the screen saver process for the remaining area, if a predetermined time is elapsed in a state that the image associated with the video communication is displayed.

The display apparatus may further comprise an input unit which inputs a select signal, and the control unit deactivates the screen saver process, if any select signal is input via the input unit in a state that the screen saver process is activated.

The display apparatus may further comprise an input unit which inputs a select signal, and the control unit recognizes occurrence of the preset event and activates the screen saver process for the remaining area, if the select signal for activating the screen saver process is input via the input unit.

The screen saver process may be one of a fade-out process and a black process.

The control unit may specify the remaining area using a size and a display position of the image associated with the video communication recognized by the communication unit, and performs one of the fade-out process and the black process for the remaining area.

The screen saver process may be a pixel shift process.

The control unit may notify the display processing unit of the size and the display position of the image associated with the video communication recognized by the communication unit, and control such that the display processing unit may specify the remaining area using the size and the display position of the image and perform the pixel shift process for the remaining area.

The display processing unit may comprise a first receiving unit which receives an output signal from an external machine; and a second receiving unit which receives an output signal from the control unit, and selects one of the first receiving unit and the second receiving unit in accordance with control of the control unit to supply the output signal received via the selected receiving unit to the display unit.

According to another aspect of the present invention, there is provided a method for implementing a screen saver in a display apparatus, the method comprising performing a video communication; displaying an image associated with the video communication on at least partial area of a screen; and activating a screen saver process for a remaining area except the at least partial area of the screen, if a preset event has occurred.

The activating the screen saver process may comprise recognizing occurrence of the preset event and activating the screen saver process for the remaining area, if a predetermined time is elapsed in a state that the image associated with the video communication is displayed.

The method may further comprise deactivating the screen saver process, if any select signal is input in a state that the screen saver process is activated.

The activating the screen saver process may comprise recognizing occurrence of the preset event and activating the screen saver process for the remaining area, if a select signal for activating the screen saver process is input.

The screen saver process may be one of a fade-out process and a black process.

The screen saver process may be a pixel shift process.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a block diagram illustrating a structure of a display apparatus according to an exemplary embodiment of the present invention;
FIG. 2A and 2B are schematic diagrams illustrating the display apparatus shown in FIG. 1;
FIG. 3A to 3C are diagrams showing a state in which a screen saver process is activated;
FIG. 4 is a block diagram illustrating a structure of a display apparatus according to another exemplary embodiment of the present invention;
FIG. 5 is a flowchart illustrating a screen saver method of a display apparatus according to an exemplary embodiment of the present invention;
FIG. 6 is a flowchart illustrating a screen saver method of a display apparatus according to another exemplary embodiment of the present invention.

### DETAILED DESCRIPTION OF EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed constructions and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

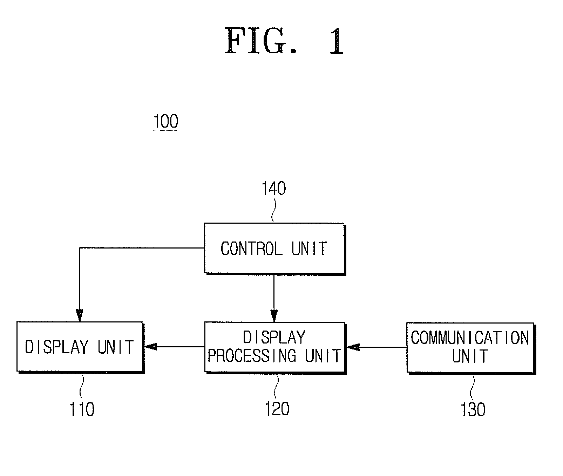

FIG. 1 is a block diagram illustrating a structure of a display apparatus according to an exemplary embodiment of the present invention. Referring to FIG. 1, a display apparatus 100 includes a display unit 110, a display processing unit 120, a communication unit 130 and a control unit 140.

The display apparatus 100 can be implemented as a video communication apparatus, which can transmit/receive an audio and a video necessary for a video communication via a local area network (LAN), a wide area network (WAN), and a metropolitan area network (MAN), which are classified pursuant to a scale.

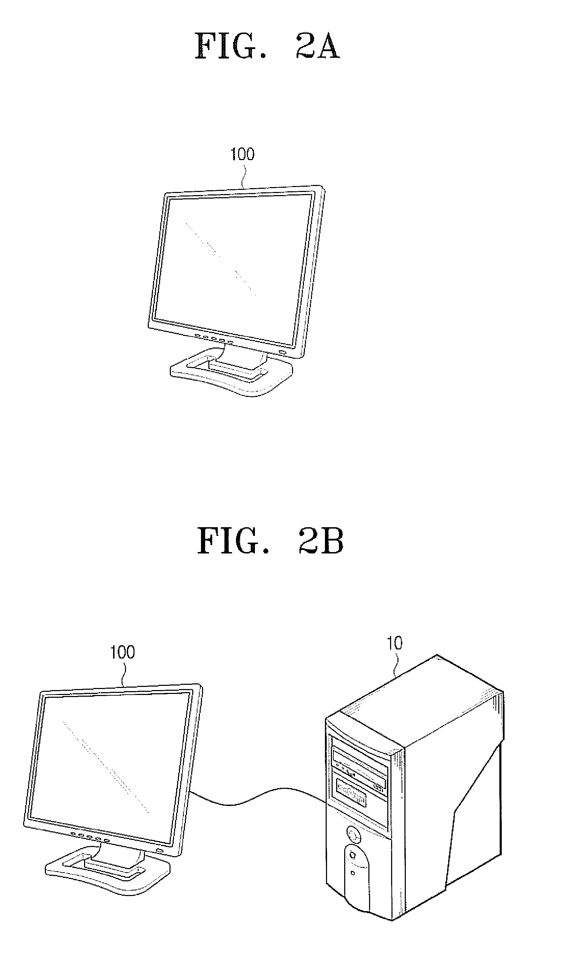

FIG. 2A and 2B are schematic diagrams illustrating the display apparatus shown in FIG. 1.

The display apparatus 100 can be not only implemented as a video communication apparatus having PC function contained within it as shown in FIG. 2A, but also functioned as a monitor by connecting it to an external PC 10 as shown in FIG. 2B.

In a case that the display apparatus 100 is implemented as shown in FIG. 2A, application programs executed by a central processing unit (CPU) within the display apparatus 100 can be displayed on the screen.

In a case that the display apparatus 100 is connected to the external PC 10 as shown in FIG. 2B, the application programs input from the external PC 10 can be displayed on the screen. This is only an exemplary embodiment for explaining embodied aspect of the display apparatus 100, and the display apparatus 100 can be implemented in various aspects.

The display unit 110 is responsible for displaying a screen associated with the video communication and a screen related to general operations of the display apparatus 100. Herein, the screen related to general operations may be a window screen in a case of using, for example, the PC function. In this case, the display unit 110 can be implemented as a plasma display panel (PDP), a liquid crystal display (LCD), a cathode-ray tube (CRT), and the like.

If the video communication is performed due to attempts of a user or the other party to be called for the video communication while the screen is displayed according to general operations of the user, the display unit 110 can display with overlapping the screen associated with the video communication on the screen according to the user's present operation. In this case, the screen associated with the video communication can be a screen on which an appearance of the other party is displayed or a screen on which an appearance of the caller himself is displayed.

The display processing unit 120 is allowed to display the screen associated with the video communication only on at least partial area of a whole screen of the display unit 110.

In other words, the display processing unit 120 can display the screen associated with the video communication on the partial area of the whole screen as sub-screen, in a state that the screen is displayed according to the user's operation associated with other functions of the display apparatus 100. In this case, a size of screen area on which the screen associated with the video communication is initially displayed in the video communication can be predetermined by the user or predetermined via automatic control of the display apparatus 100. Also, it can be controlled by the user in real time.

The display processing unit 120 can include a first receiving unit (not shown) for receiving an output signal of an external machine and a second receiving unit (not shown) for receiving an output signal of the control unit 140, which will be described later. In this case, the display processing unit 120 selects one of the first receiving unit and the second receiving unit in accordance with control of the control unit 140, and supplies the output signal received from the selected receiving unit to the display unit 110. The external machine can be implemented as various devices such as a PC, a TV, a digital versatile disc (DVD), and a personal video recorder (PVR).

The communication unit 130 is responsible for performing the video communication. More specifically, the communication unit 130 can transmit/receive the video communication data associated with the video communication, and process it to enable displaying the video communication data transmitted from an external display apparatus on the display unit 110. Moreover, it can function to transmit signal input via a camera (not shown) to the external display apparatus.

The picture image taken by the camera is transmitted to the display apparatus 100, and then transmitted to the external display apparatus via a network interface (not shown). The display apparatuses connected with each other via the network can exchange information with each other in accordance with defined communication protocols. In other words, they can exchange information containing video information, audio information, message information and the like. The information are generally compressed and transmitted for the purpose of enhancing a speed of communication.

The program used for the video communication is programmed in accordance with a predefined protocol, so that it may separate only video data from data transmitted to the network interface and output it to the display processing unit 120. The display processing unit 120 displays the video data on the display unit 110.

The camera converts the taken image into an electric signal and transmits it to the display processing unit 120. The image data is transmitted to the display apparatus of a desired user in the communication network via the network interface (not shown), and is displayed on the screen. Also, the camera can trace, detect, and magnify only face or bust of the user and transmit it to the display apparatus, which is for the purpose of protecting privacy of the user. Consequently, the tracing and detecting function may not be applied selectively in accordance with the user's setting.

Further, the display apparatus 100 can have a microphone array (not shown). The microphone array is composed of a plurality of microphones, each of which receives an audio signal of the user. The audio signal received is analyzed in order to confirm an approximate position of the user.

Subsequently, the display apparatus 100 can trace and detect the face or bust of the user who is in the position to be confirmed using the camera and the microphone array, and remove the audio signal incoming in different direction from that position and amplify only audio signal incoming in the direction of the user position.

Further, the display apparatus 100 can provide the video communication selectively with a plurality of other parties. More specifically, if the user receives a request message for telephone call from another party while performing the video communication with a particular party, he can convert an earlier call in the course of the video communication into a call-waiting condition and then respond to a later call. At this time, it is preferable that the video and audio of the user are not transmitted to the display apparatus of the particular party in the call-waiting condition.

Further, the user can execute the video communication simultaneously with the plurality of other parties, and control the video communication with the plurality of other parties by selecting or removing a certain party from a list of other parties shown in the screen.

The control unit 140 performs a screen saver process for a remaining area except an image display area, if a preset event has occurred. Herein, the preset event can be a type of elapsing of a predetermined time.

In other words, the control unit 140 recognizes the occurrence of an event and automatically activates the screen saver process for the remaining area except the image display area associated with the video communication, if the predetermined time is elapsed in a state that the image associated with the video communication is displayed on the display unit 110.

More specifically, the control unit 140 can perform one of a fade-out process and a black process for the remaining area except the image display area associated with the video communication, if the predetermined time is elapsed.

The fade-out process allows for the screen to be blurred, which can be carried by reducing substances of luminance signal Y and color signal Cr, Cb of the screen. Also, it can be carried by reducing substances of RGB color signal. A degree of reduction in the luminance signal Y and the color signal Cr, Cb can be predetermined by the user and be occasionally controlled by the user using control switches equipped with the display apparatus 100. On the other hand, the black process allows for the screen to be processed as a gray scale color, particularly black, which can be carried by processing the luminance signal Y and the color signal Cr, Cb of the corresponding pixel as black level.

The communication unit 130 is responsible for recognizing a size and a display position of the screen on which the image associated with the video communication is displayed. That is, the communication unit 130 recognizes the size and the display position of the screen on which the image associated with the video communication is displayed and informs the control unit 140 of them, and then the control unit 140 specifies the remaining area on which the screen saver process is activated using the size and the display position of the screen associated with the recognized video communication and performs one of the fade-out process and the black process for the specified remaining area. Depending on the case, the control unit 140 can perform a pixel shift process for the whole screen containing the area on which the image associated with the video communication is displayed.

The pixel shift process means a technology that shifts the screen displayed on the display unit 110 upward/downward and leftward/rightward every given time. That is, it is allowed to move the pixels composing the screen at a level enough not to be recognized by the user.

The control unit 140 can notify the display processing unit 120 of the size and the display position of the screen associated with the video communication recognized by the communication unit 130.

At this case, the display processing unit 120 can specify the remaining area except the screen associated with the video communication using the size and the display position of the screen notified from the communication unit 130, and perform the pixel shit process for the specified remaining area.

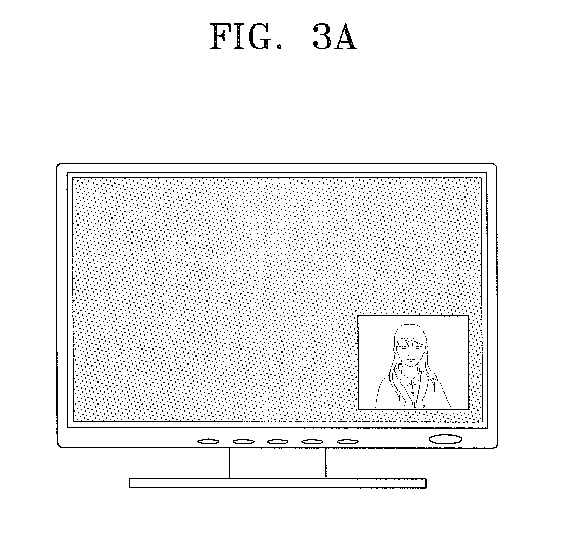

FIG. 3A to 3C are diagrams showing a state in which a screen saver process is activated.

Referring to FIG. 3A, it is appreciated that the remaining area except the screen associated with the video communication is processed as the black screen. Though the screen saver is processed as the black screen in this exemplary embodiment, any other color of a similar level to black is also possible depending on the case.

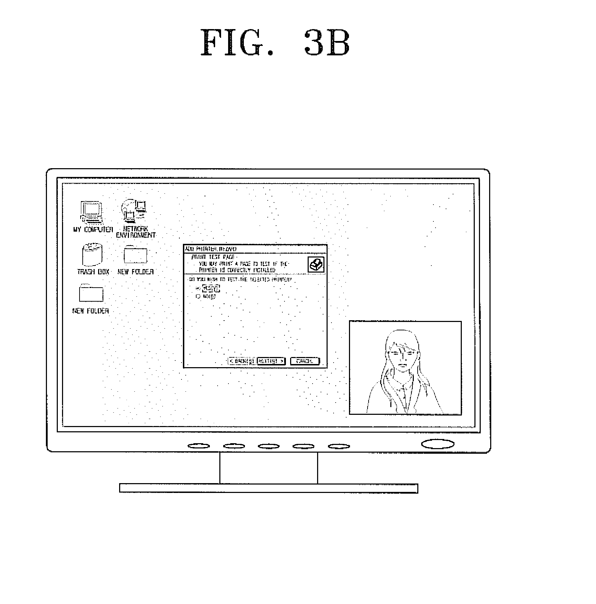

Referring to FIG. 3B, it is appreciated that the remaining area except the screen associated with the video communication is subject to the fade-out process

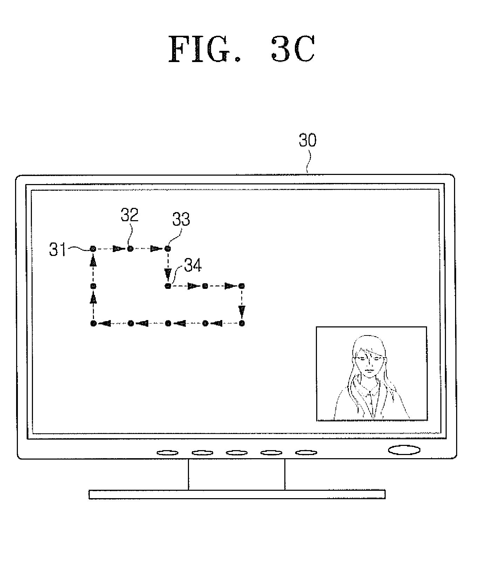

Referring to FIG. 3C, it is appreciated that the remaining area except the screen associated with the video communication is subject to the pixel shift process. The pixel shift process is implemented by moving the pixel 31 upward/downward and rightward/leftward to return the pixel 31 into the original position after elapsing of any specified time. Though single pixel 31 to 34 is shown in FIG. 3C, all of the pixels composing the screen 30 are substantially moved in such a manner as described above, in order to prevent the after-image of the screen and the deterioration of the pixel quality.

Further, upward/downward and rightward/leftward distances and a unit time for the pixel movement can be predetermined by a product manufacturer, directly set by a user using on screen display (OSD), or changed by the user using a menu prepared whenever the user wants.

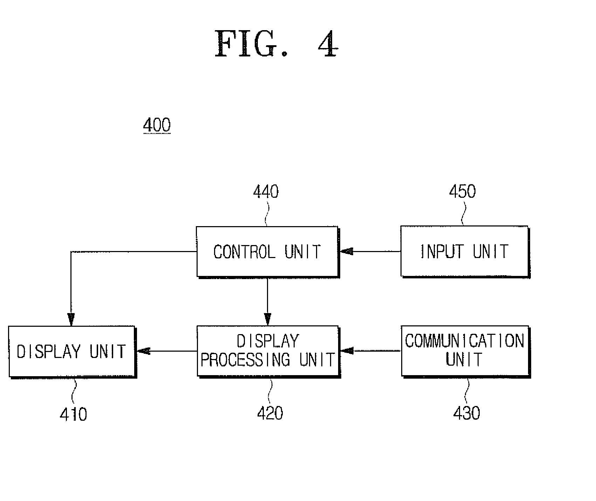

FIG. 4 is a block diagram of a structure of a display apparatus according to another embodiment of the present invention. Referring to FIG. 4, a display apparatus 400 includes a display unit 410, a display processing unit 420, a communication unit 430, a control unit 440 and an input unit 450. The explanation of each component of the exemplary embodiment shown in FIG. 4 similar to that of the exemplary embodiment shown in FIG. 1 will be omitted.

The input unit 450 is input with a select signal from a user. The input unit 450 may be implemented by an external input device, such as a key panel included in the display apparatus 400, a keyboard or a mouse connected to the display apparatus 400 via a cable or wirelessly, a remote controller, or other input device.

The input unit 450 is input with a select signal for activating the screen saver process or a select signal for deactivating the screen saver process. Herein, the select signal can be input by the user via user action such as mouse click or certain key pressing.

Further, the input unit 450 is input with a select signal for selecting size control, spacer control, hidden control of the area on which the image associated with the video communication is displayed.

The control unit 440 can deactivate the screen saver process, if any select signal is input via the input unit 450 during the state that the screen saver process is activated on the remaining area except the area on which the image associated with the video communication is displayed. For example, it is possible to deactivate the screen saver process, if the select signal for deactivating the screen saver process is input via user action such as certain key pressing or mouse click during the state that the screen saver process is activated.

Further, the control unit 440 can recognize the occurrence of an event requiring the screen saver process and activates the screen saver process, if the select signal for activating the screen saver process is input via the input unit 450. That is, the control unit 440 can recognize the occurrence of the event requiring the screen saver process and perform the screen saver process of a predetermined kind for the remaining area except the image associated with the video communication, if a user instruction on the screen saver process is input via the input unit 450. Herein, the screen saver process is exemplified as a black process, a fade-out process, and a pixel shift process.

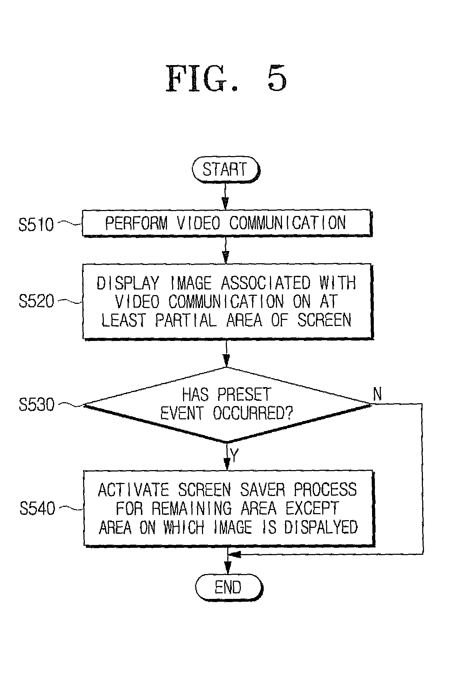

FIG. 5 is a flowchart for explaining a screen saver method of a display apparatus according to an exemplary embodiment of the present invention.

According to the screen saver method of FIG. 5, if a video communication is performed (S510), an image associated with the video communication is displayed on at least partial area of the screen displayed at present (S520). Herein, the display apparatus can display an output signal from an internal CPU or an output signal from an external machine.

Subsequently, it is confirmed whether a preset event has occurred (S530). Herein, the preset event can be a type of elapsing of a predetermined time and an input of any select signal.

If the preset event has occurred as a result of the confirmation in operation S530, a screen saver process can be activated for a remaining area except the area on which the image associated with the video communication is displayed (S540). Herein, the screen saver process may be one of a fade-out process, a black process, and a pixel shift process.

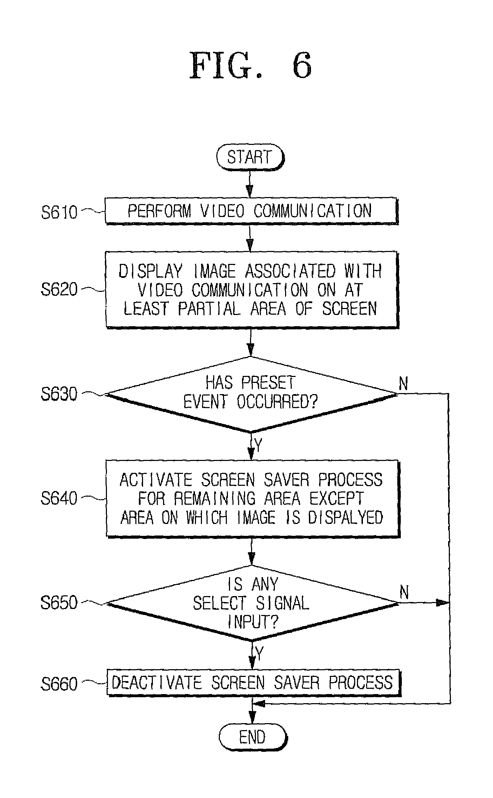

FIG. 6 is a flowchart for explaining a screen saver method of a display apparatus according to another exemplary embodiment of the present invention.

In accordance with the screen saver method of FIG. 6, if a video communication is performed (S610), an image associated with the video communication is displayed on at least partial area of the screen in the course of the operation at present (S620). Subsequently, it is confirmed whether a preset event has occurred (S630).

If the preset event has occurred as a result of the confirmation in operation S630, a screen saver process can be activated on a remaining area except the image display area (S640). Herein, the preset event can be a type of a predetermined time passage.

Alternatively, if a select signal for activating the screen saver process is input from the user, the event is considered as being occurred so that the screen saver process can be activated on the remaining area except the image display area. Herein, the select signal for the screen saver process can be input via a key panel mounted with the display apparatus or an external input device wired or wirelessly connected with the display apparatus.

Subsequently, it is confirmed that any select signal is input while the screen saver process is activated (S650).

If it is confirmed that a select signal is input from the user as a result of the confirmation in operation S650, the screen saver process can be deactivated for the remaining area except the area of the image associated with the video communication (S660). Herein, any select signal can be input via user action such as certain key pressing or mouse click by means of the external input device such as a key panel, a remote controller or a mouse which is mounted with the display apparatus.

Consequently, it is possible to prevent an after-image in circumferential screen and a deterioration of pixel quality due to the video communication for a long time.

In accordance with exemplary embodiments of the present invention as described above, it is possible to prevent the after-image in the circumferential screen and the deterioration of the pixel quality due to the video communication for a long time by activating a screen saver process for the circumferential screen except the screen area associated with the video communication, which results in enhancing convenience of the user.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus comprising:
a display unit;
a communication unit which performs a video communication;
a display processing unit which displays an image associated with the video communication on at least partial area of a screen of the display unit; and
a control unit which activates a screen saver process for a remaining area except the at least partial area of the screen, if a preset event has occurred.

2. The display apparatus of claim 1, wherein the control unit recognizes occurrence of the preset event and activates the screen saver process for the remaining area if a predetermined time is elapsed in a state that the image associated with the video communication is displayed.

3. The display apparatus of claim 2, further comprising an input unit which inputs a select signal, wherein the control unit deactivates the screen saver process, if any select signal is input via the input unit in a state that the screen saver process is activated.

4. The display apparatus of claim 1, further comprising an input unit which inputs a select signal, wherein the control unit recognizes occurrence of the preset event and activates the screen saver process for the remaining area, if the select signal for activating the screen saver process is input via the input unit.

5. The display apparatus of claim 1, wherein the screen saver process comprises one of a fade-out process and a black process.

6. The display apparatus of claim 5, wherein the control unit specifies the remaining area using a size and a display position of the image associated with the video communication recognized by the communication unit, and performs one of the fade-out process and the black process for the remaining area.

7. The display apparatus of claim 1, wherein the screen saver process comprises a pixel shift process.

8. The display apparatus of claim 7, wherein the control unit notifies the display processing unit of a size and a display position of the image associated with the video communication recognized by the communication unit, and controls such that the display processing unit specifies the remaining area using the size and the display position of the image and performs the pixel shift process for the remaining area.

9. The display apparatus of claim 1, wherein the display processing unit comprises a first receiving unit which receives an output signal from an external machine and a second receiving unit which receives an output signal from the control unit, and selects one of the first receiving unit and the second receiving unit in accordance with control of the control unit to supply the output signal received via the selected receiving unit to the display unit.

10. A method for implementing a screen saver in a display apparatus, the method comprising:
performing a video communication;
displaying an image associated with the video communication on at least partial area of a screen; and
activating a screen saver process for a remaining area except the at least partial area of the screen, if a preset event has occurred.

11. The method of claim 10, wherein the activating the screen saver process comprises recognizing occurrence of the preset event and activating the screen saver process for the remaining area, if a predetermined time is elapsed in a state that the image associated with the video communication is displayed.

12. The method of claim 10, further comprising deactivating the screen saver process, if any select signal is input in a state that the screen saver process is activated.

13. The method of claim 10, wherein the activating the screen saver process comprises recognizing occurrence of the preset event and activating the screen saver process for the remaining area, if a select signal for activating the screen saver process is input.

14. The method of claim 10, wherein the screen saver process comprises one of a fade-out process and a black process.

15. The method of claim 10, wherein the screen saver process comprises a pixel shift process.
